# EUROPEAN PATENT APPLICATION

(11) **EP 1 195 184 A2**
(43) Date of publication of application: **10.04.2002**
(21) Application number: 01308602.0
(22) Date of filing: 09.10.2001
(51) Int. Cl.: A63F 13/12, G06F 17/60, G06F 19/00, H04H 9/00, H04N 7/173

(54) **Apparatus for playing a quiz game**

(30) Priority: 09.10.2000 IN MU091000
(71) Applicant: Ubale, Ajay Ganesh, Mumbai 400 021 (IN); Ubale, Sangita Ajay, Mumbai 400 021 (IN); Correa, Nixon Henry, Mumbai 400 061 (IN); Pradhan, Aditya Anil, Mumbai 400069 (IN)
(72) Inventor: Ubale, Ajay Ganesh, Mumbai 400 021 (IN); Ubale, Sangita Ajay, Mumbai 400 021 (IN); Correa, Nixon Henry, Mumbai 400 061 (IN); Pradhan, Aditya Anil, Mumbai 400069 (IN)
(74) Representative: Loveless, Ian Mark

(57) **Abstract**

Apparatus for playing a quiz game of skill playable by remotely located participants simultaneously logged in and competing against each other, said game including inserted advertising comprising:
a network structure for allowing multiple players to engage in a quiz game using an electrical or electronic network for data exchange; and
a control system for establishing a virtual universe for said quiz game that can be accessed by any of said multiple players via an electrical or electronic network, said control system being operative for providing quiz questions and inserted advertisement for each of said multiple players; said control system including:
   text means for receiving a text input from each one of said multiple players, said text input being in response to the quiz question which is in the form of a multiple choice question.

## Description

### BACKGROUND OF THE INVENTION

The present invention relates to a quiz game of skill playable by remotely located participants, said game including inserted advertising.

Television Quiz programs are increasingly becoming popular. Any event on television, which offers easy cash in the form of reward, has a large viewer ship. The interest of the viewers is primarily in participating and if the same is not possible then to feel as a part of the event they would at least like to be part of the audience. The method of participating in the program requires individuals to follow a complicated dial in procedure. A large number of viewers try to dial-in but do not get through and this leaves the viewer frustrated.

The strengths of television quiz programs are primarily in;
Cash rewards
Reach of Television and
Personality of the host

The weakness of these programs will always lie in the fact that Television is not a two-way interactive medium Also, the participant going to the studio for recording a program, risks showing his greed publicly and in case of an incorrect answer, face embarrassment in front of a large television audience and all television viewers. Necessarily, the game cannot be live and has to be canned several days in advance. This fact has to be suppressed from the live viewers in order they may feel that the program is live. The strength and popularity of the program also lies in the popularity of the anchor/host who has to be paid heavily and is attendance has to be assured. This may not be possible all the time. Therefore, an event of this type i.e. contests cannot be a live event and can not accommodate all viewers for participating live in the event /program.

The format of currently popular TV Quiz programs provides a chance to only about 3 (three) participants per day for four times a week. Hence, in a month not more than 50 (fifty) participants can avail the chance to try their luck. This figure of 50 is dismally low as compared to the viewership of the Television medium. The interest of the viewers' will therefore wane out over a period of time especially for those who have not got selected in the preliminary rounds, for participating Such persons will be more interested in knowing the dates when they can try their luck again by sending-in their entries.

Contests and other games have been tried on the electronic/electrical network such is the Internet or the telephone network. One particular · problem associated with playing an interactive game on an electrical or electronic network particularly when the game involves, performing an activity such as answering a quiz question in the shortest possible, and rewarding a participant who responds the quickest, is that participants who are connected to an electrical or electronic network are not able to receive game instructions such as game quiz questions and respond thereto in uniform time. One of the reasons for this non-uniformity is that, different participants would be using nodes, which operate at different speeds or may be connected to networks over which information is transmitted at varying speeds.
An event / program is therefore needed which can;
1. Be completely interactive; i.e. allows all the viewers at least a chance to participate;
2. Provides cash rewards /incentives for successful participation;
3. Provides the excitement of live participation in a competitive contest while sitting in the comfort of Homes, Offices, Cyber café, etc.
4. Provide an interactive game, which is independent of the speed at which individual participant nodes operate or the speed at which information is transmitted or received over an electrical or electronic network to which the participant node is connected.

### SUMMARY OF THE INVENTION

Particularly, the present invention relates to the use of controller means located at one location and a plurality of participating nodes competing against each other located remotely from the controller means the nodes communicating with the controller means via an electrical or electronic network to create and maintain a multi-user on-line game. Although it is initially envisaged that the game will be played on-line on an electrical or electronic network, the apparatus of the game and the game itself can be extended to other network media including Web-TV WAP, telephone video conferencing, set top boxes and the like and images received via the mass communication's channel provided by an FM (SCA) channel or vertical blinking interval (VBI) of a television signal or other link such as cable.

More particularly, the present invention relates to an interactive on-line quiz game that can display interactive quiz content and permit controlled and selected interaction broadcast from a central broadcast location or server to remote locations, and that can provide simultaneous competitions between participants at remote locations and has therein advertisements inserted in the form of banners, two and three dimensional visual sequences, video and audio clippings and the like preferably during non-gaming intervals in game segments but which can be extended to even advertisements in a separate window during an on-line game.

The invention provides to a participant, a game show with a chance to play and enjoy the thrill of an on-line contest sitting in the comfort of his/her home or office along with family members and friends. While the inclusion for selection is guaranteed, the selection for answering a question is a matter of luck. This increases the thrill. Every day, several hundred individuals can get an opportunity to answer the questions as compared to the 50 per month offered by TV Game shows. Apart from increasing the knowledge level of the viewers, the game also offers a chance to the participants, to win prizes by exercising their intellectual ability and an opportunity to advertisers to air their wares to a captive audience.

Therefore another feature of the invention is the simultaneous broadcast of advertisements. A major source of income for many entertainment businesses including an electrical or electronic network, television, cable, WAP, radio and print media is advertising. Internet advertisers especially would like to receive maximum exposure and optimum feedback on the part of the consumer after watching an ad with a minimum of effort. Internet advertisers would like to have as many active and passive viewers watching their advertisement. Hitherto it has not been possible to retain an electrical or electronic network users interest for a sufficient long time like in the case of a television advertisement. Hitherto it has not been possible to display full screen advertisements - static or moving, with or without an audio component during the running of an interactive game on n electronic network.

### OBJECT AND SUMMARY OF INVENTION

It is an object of this invention to provide a game that brings all the quiz aspirants in the world together under one umbrella and allows them to play a quiz game simultaneously from all parts of the world via remotely located nodes competing against each other connected to a central controller means.

It is a further object of the invention to promote the quiz game of this invention as a group leisure activity for family, friends and teams by allowing the participant to take advice or seek help from any quarter.

The invention also aims at improving the general knowledge and general awareness of participants and viewers and for achieving this purpose introduces the quiz game in a competition format in the form of recognizing the winner as, the one who gives the correct answer in the least time. Incidentally, the recognition to the winner and thrust to the competition is in the form of prize money of different amounts and encouragement to a participant to excel in future is in the form of rewarding every correct answer. A participant is therefore eligible for selection as participant on any of the subsequent days in accordance with the preferred rules of the game in accordance with this invention.

This invention also provides a cost-effective medium for advertising on an electrical or electronic network assuring maximum number of 'eyeballs' for sustained captive viewership. For instance, by way of example the game may require the answer of a question submitted by an on-line participant to be received at the central controller means, processed and the outcome conveyed to the participant before the next question is displayed in the next game segment. The time taken to complete this process may be estimated for example at 1 (One) minute from the end of time limit for answering that question. A buffer time of 1 minute may also taken into account for selecting the next 25 participants. Thus at the end of every question a time limit of 2 (Two) minutes can be available before the next question is displayed. During the course of 16 question the total time interval available therefore can be 30 minutes which can be utilized in accordance with this invention for running predecided advertisement campaigns of different products inserted into the game show in a unique manner as envisaged in this invention. As the participant will be waiting to see the outcome of his answer, therefore his viewer ship is ensured.

It is a particular object of this invention to provide a quiz game in which a participant can play in the relative anonymity and comfort of his own home, either individually or collectively in a group without any age restriction or constraint and using any means and guides at his disposal and the quiz game itself can be conducted inexpensively and with or without limitation to any national boundaries.

It is, therefore, a general object of the present invention to provide a game of skill in the form of an on-line quiz playable by remote participants playable alone or in a group, in accordance with pre-set rules which will be disclosed hereinafter.

It is a further object of this invention that before and during the game, advertisements and general interest messages will be inserted in a unique manner, which participants and viewers of the game will have no option but to see if they wish to participate in the game. In accordance with one embodiment of the game, it is envisaged that the advertiser will get immediate feedback during the running of the game itself as a particular question may be related to advertisements posted during the particular game itself. Therefore the game event may include inserted interactive advertising.

In accordance with the above object, there is provided a quiz game played simultaneously by several participants remote from each other in conjunction with at least one common central controller means and interactive advertising is inserted into the game.

According to another object of this invention the invention relates to the use of a centrally located controller means and remotely located nodes communicating with each other via an electrical or electronic network to create and maintain a multi-user on line quiz game interspersed with preselected advertising. The virtual world of the game is presented to each user by means of text, video and dimensional audio.

The game uses a central controller remotely located node architecture with unique connecting means designed specifically to enable the nodes of a plurality of participants to be configured to participate in the game as competitors or as audience and receive advertisements.

It is envisaged that a central computer system supervises and controls both the overall game and the inserted advertising and that in general, the present invention is applicable to any type of game of skill or chance or contest which is communicated to a remotely located participant or user by, an electrical or electronic network, a standard television signal, cable, satellite or other transmission technique.

It is envisaged that the remote participants will have communication means, which can receive the common game along with interactive advertising. Control means and sequences are created which are associated and linked with each remote participant to receive the game and interactive advertisement inputs by such participant including keyboard means and a visual display. The control unit means includes a game data stream and an interactive advertisement data stream, which may be selectively associated with the keyboard means and visual display. Central computer system means or server means transmits and downloads game messages and interactive ad messages to all of the participant nodes and receives uploaded game data and/or interactive ad data from the control unit means which are related to the inputs, the control unit means continuing to process both of said interactive advertisement and game messages on said respective data streams irrespective of which data stream said keyboard means and said display are associated with.

Thus in accordance with this invention an apparatus for use in operating a computer-based game is envisaged, comprising:
a network structure for allowing multiple players to engage in a quiz game using an electrical or electronic network for data exchange; and a control system for establishing a virtual universe for said quiz game that can be accessed by any of said multiple players via an electrical or electronic network, said control system being operative for providing quiz questions and inserted advertisement for each of said multiple players; said control system including:
   text means for receiving a text input from each one of said multiple players, said text input being in response to the quiz question which is in the form of a multiple choice question.

The on-line quiz game apparatus, in accordance with this invention may in accordance with a preferred embodiment of this invention comprise an interactive control unit at a remote location for selecting, storing, transmitting and displaying questions on a display terminal at a plurality of remote locations and for receiving, storing and analyzing user answer choices to said questions; a plurality of user side apparatus for users to enter said answer choices; said interactive control unit comprising a computer, a base station connected to said computer for receiving said user answer choices from said user side apparatus and sending said user answer choices to said computer, a broadcast receiver connected to said computer for receiving broadcasts containing a series of questions from a central broadcast facility and sending said broadcasts to said computer, and a modem connected to said computer for transmitting statistics based on said user answer choices to said central broadcast facility after said users have entered said answer choices to one or more questions within said broadcast.

The apparatus further comprises means for managing participant-controller communications and server processing by having the participant node software perform functions that do not specifically need to be addressed to the server, and by caching on a participant node advertisements and other textual, audio and visual matter and information which a player or viewer will be provided access more than once. To optimize the efficiency of participant node/controller communication, it is necessary to minimize the amount of data passed between the participant node and server, and minimize the amount of processing required by the server, since it is required to respond to all game participants. This is achieved by moving as much processing as possible from the controller means to the participant nodes. Data is cached on the participant node. A large part of the data that is normally sent between participant node and controller and server comprises object and sector descriptions, many of which are sent repetitively. According to the present invention, whenever the server wishes the nodal display to display a description, it sends a number representing that object (2 bytes compared with up to 500 bytes for a full text description). The node refers to the cache and prints the description. If it does not find the description in its cache, it will request the description from the server at that time. Thus, the sending of description is minimized.

This method reduces server processing as well as message size, because the server is not required to perform any error checking for user entered commands. It can always assume that input from the node is valid, so it only needs to execute it and send back the result. The server load is also reduced because file transfers are reduced.

The apparatus for use in operating a computer-based game, therefore further comprises means for sending output signals from a central computer system relating to the quiz game, means for receiving input signals from users who wish to register as potential participants in the game, means to store data relating each of the registered participants with means to continuously update such data , data storage means, to receive and store quiz questions and updating means to add or delete questions in the question store, randomizing means to randomly select participants from the stored data bank of users and for selecting a particular question to be incorporated in the quiz game receiving means for receiving input signal means representative of response regarding said quiz game from any of multiple players, processing means for processing time bound response time of data received from each of the multiple players said means further having means in which answers to the quiz question are entered for comparison of the entered answer with the stored, correct answer. A storage device, the storage device being controlled by a controlling means, determines the winners of the quiz game and means to identify which of the participants has responded correctly and in the shortest response time. a processor for processing said input signal representative of data and outputting in substantially real-time text, video and/or audio information relating to said game in response to said input, said processor being operative for establishing at least one game winner for each segment of the quiz game.

The apparatus for the game in accordance with this invention includes a game controller computer which is the central computer system with a computer memory which transmits a game quiz question to a game participant node received at a first time, timing means for storing the first time in the computer memory; examining submission information provided over an electrical or electronic network by the game participant node to the game controller computer at a second time; and storing the second time in the computer memory. The term "electronic network" used throughout this specification includes, the internet, electromagnetic, optical, infrared networks, wireless networks and any other digital, analog or frequency based networks.

The apparatus further includes means for allotting each game participant with a uniquely identified by a unique identifier and wherein the first time and the second time for each game participant and for each question are stored in the computer memory device in association with the unique identifier of each game participant.

The on-line game apparatus may include means wherein the interactive control unit permits a server controller to add and delete questions from a question data bank stored in the question storage database. The storage means is connected to said central controller system for electronically organizing and storing said questions.

Although the game discussed in this specification is discussed as a quiz format game the game can be in other formats including a countdown format, or a wipe out format or a lightning round format.

The interactive controller in accordance with this invention may include means to count the appropriate time for responses, and keep track of scores. Following the time period for selecting answer choices, the correct answer can be displayed, as well as a scoreboard to provide instantaneous feedback regarding a participant's progress. Additionally, personalized feedback can be provided on each remote location of a participator player or a viewer, which can be used to provide locational specific message or information and for indicating the correct answer at the end of each question round in a game segment, and displays user scores and ranking.

It can be envisaged that this invention provides a method for advertising within the virtual and dynamic environment of a quiz game on line over an electrical or electronic network Default images of games could be replaced by alternative textures having advertisements implemented therein. An ad server could be provided at the central computer system, which coordinates the matching of ads to demographic data of the game player and properly accommodates advertisements in formats suitable to the game player.

These as well as other features of the invention will be described in greater detail below.

Typically, in accordance with one preferred practical embodiment the apparatus of the invention can be used to play a game of a Quiz on an electrical or electronic network, as per the rules specified below.
1. Any person who wishes to participate in the game has to register himself at the game site and log-in during the specified time prior to the start of the game. While the registration of the member will be valid until revoked by the administrator operating the controller or cancelled by the member, the login-id will be valid for one session only.
2. Users logged on only during a pre specified valid login time prior to the commencement of the game will be able to participate in the game as game players other users can only view the game as viewers or spectators for that day.
3. There will be a time difference (say around 10 minutes) between the valid login time and the time when the game will commence on an electrical or electronic network. The administrator again can modify this figure.
4. Those people logged on after the specified time will only be able to watch the show as spectators. The administrator again can modify this figure. The administrator again can modify this figure.
5. Typically, 16 questions will be asked in the game during one episode or segment per day. The administrator of the central computer system can always modify the number of question asked per episode or segment.
6. Prizes will be awarded to each correct answer for each of the questions. The administrator again can modify this figure.
7. Randomly 25 users will be selected by the central computer system from data storage means in or linked to the central computer system and using randomizing means to play the game, all other users will be spectators to that question. The administrator again can modify this figure.
8. It is envisaged in accordance with the rules of the game that the first fifteen questions will have prizes as follows: The player to give the fastest correct answer will be awarded a prize of say Rs 10,000. Each of the remaining players who have given the right answer will be awarded a prize of Rs 1000. The sixteenth question will carry a top prize of Rs 100,000 for the fastest correct answer but the other correct answer givers will get a prize of Rs 1000 each. This parameter can be modified.
9. The selection criteria for the 25(or more) users selected for the 15 (or more) question and the bumper prize can include users selected in accordance with a fixed proportion from users registered who have registered within the specified time limits with the central computer system who have:
   a. Never played before.
   b. Played before in a segment prior to the date of the segment or episode.
10.Each of the batches of 25 users selected for a particular question is eligible to answer only one question of the first fifteen questions. A user who has given the correct answer for any of the first fifteen questions is eligible to give an answer for the sixteen bumper prize question.
11.Each question asked must be answered in a fixed time, which will be decided again by the administrator and hence will be variable.
12.There are 4 Choices as answers to every question. These choices will be kept in the submit button of those participants selected to answer a particular question. The number of choices can be varied
13.The user who answers the question fastest is the winner and will be given a prize. The amount of the figure or the type of the prize will be decided by the administrator and hence will be variable.
14.All other users giving the correct answer are eligible for a token prize, which will be decided by the administrator.
15.All users giving the correct answer to the question fired will be again selected for answering the bumper question asked at the end of the quiz show along with 25(or more as per the admin.) randomly selected new users.
16.All the users are given a login time (as a login number). In case there is a tie then the person who has logged earlier will get the prize.
17.At a time only one login ID is permitted (that means a person with "xyz" Login id cannot login from 2 different computers at the same time.

### BRIEF DESCRIPTION OF DRAWINGS

The invention will now be described with reference to the accompanying drawings, in which

FIG. 1 is a block schematic diagram of the overall apparatus embodying the present invention.

FIG. 2 is a block diagram of the Application Server forming part of the apparatus embodying the present invention as seen in FIG. 1.

FIG. 3 is a block diagram of the Database Server forming part of the apparatus embodying the present invention as seen in FIG. 1.

FIG. 4 is a block schematic diagram of the Controller means or participant node means forming part of the apparatus embodying the present invention as seen in FIG. 1.

FIG. 5 is a block schematic diagram of the broad outline of the method for setting up the apparatus for playing the interactive game using the apparatus embodying the present invention as seen in FIG. 1.

FIG. 6 is a block schematic diagram of the method of playing the interactive game using the apparatus embodying the present invention as seen in FIG. 1. And

FIG. 7 is a graphical time sequence schematic diagram showing the time sequence controls in the course of showing the interactive game of the present invention.

### DETAILED DESCRIPTION OF THE PREFERRED EMBODIMENT

The details of the method for playing the game and the apparatus needed therefore are described herein further in detail.

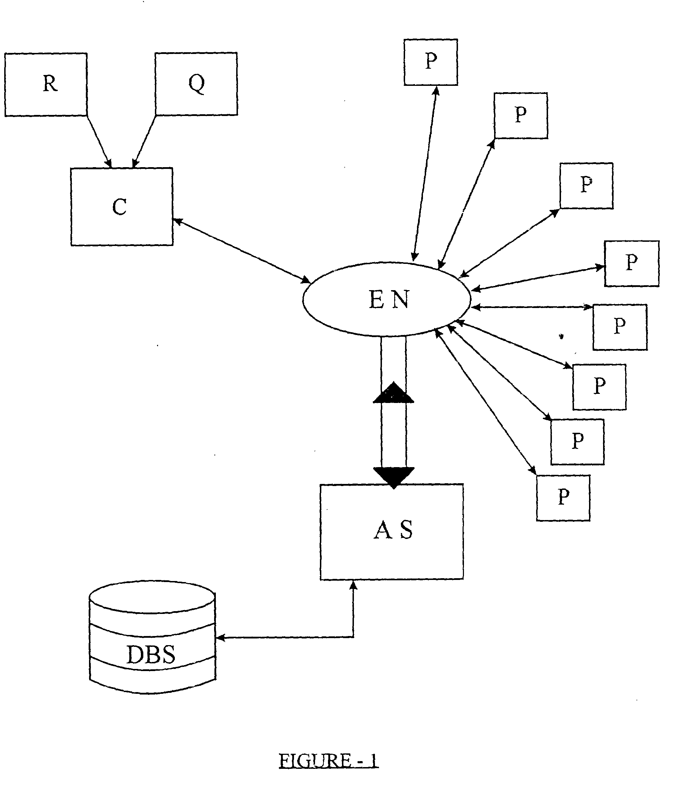

Referring to FIG. 1 of the drawings the game in accordance with this invention involves the following apparatus configured in a normal manner :

A game Controller indicated by the reference numeral C that could be a personal computer setup in accordance with a preferred embodiment of this invention. The Controller Means C includes various means not described separately, which permits only an authorized administrator to operate the Controller Means C, and includes security sequences, Administrator validation and confirmation and such other sequences which maybe determined.
A bank of questions Q for playing interactive quiz game, said bank being made to cooperate with the game Controller C.
The apparatus includes a set of rules R, which enable the Controller C to operate the game in accordance with this invention. The game is played by a plurality of participant nodes P. The apparatus includes a bank of application servers AS including at least one Application Server and a bank of Database Servers DBS including at least one Database Server.

The apparatus also requires an electrical or an electronic network such as the Internet via which the apparatus are interconnected as shall be herein after described in detail.

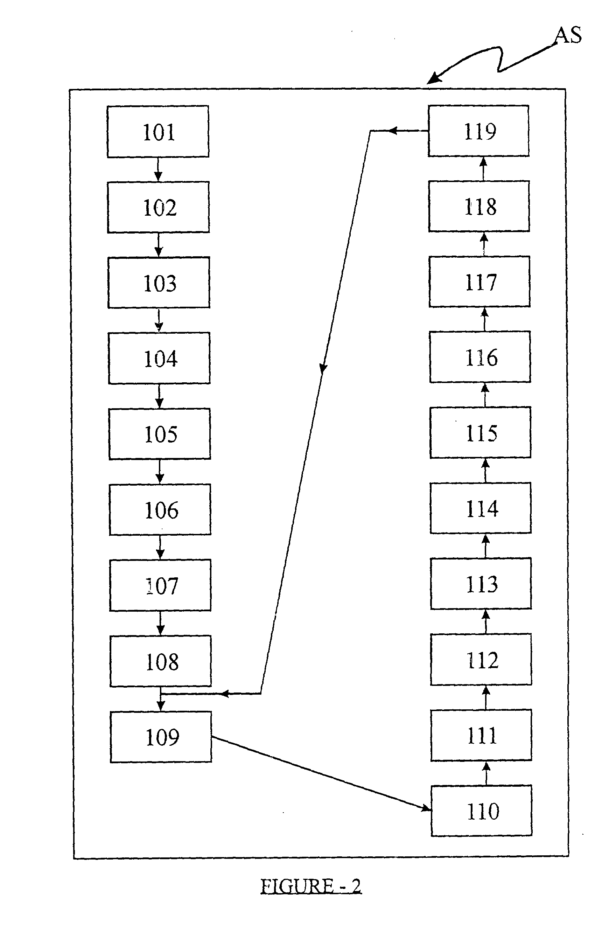

FIG. 2 illustrates the various tools loaded or created in the Application Server AS for playing of the interactive game in accordance with this invention. The tools include:
Set Game Parameter Means - 101, which enable the Controller C to set the rules R and parameters for playing the game. It also allows the administrator operating the Controller C to edit, modify, alter, delete, and add new and or otherwise change the Parameters for playing the game. The Application Server AS includes a Set Parameters for Advertisement Means - 102, which enables the Controller C to set the Advertisements to be inserted in between game intervals. It also allows the administrator operating the Controller C to edit, modify, alter, delete, and add new and or otherwise change the Parameters for Advertisement during the playing of the game. The AS includes a tool for New Registrations, the register user means - 104, which enable the Participants P to register their details with the Controller C, sc as to login and play the game. The Add questions to Question Database means - 103, allows the controller C to add, edit, modify, alter, delete, add new and or otherwise change the questions for playing the game. The User Login Means - 105, allows pre-registered participants P to submit their login information including User-id and Password to the Controller C for playing game. The User Validation means - 106, validates the Login information supplied by participants P in the process of Login initiated by User Login Means - 105, in respect of registered users, registered by the New Registration Tool the register User Means - 104. The Application Server AS includes a Classification Means - 107, which permits the classification of the logged in users into different categories on the basis of information provided by the Participants P at the time of Login. The Off-time Game Playing Means - 108, allows a Participant P to play the Game in Off-Time mode.

The game is initiated and played by the Means Select User Means-109 to display User Means 119 as is herein described. The Select User Means 109 selects a set of Participants P from the Currently Logged in Users to play a segment of the game in accordance with the rules of the game and parameters set by set game parameters means - 101. The Intimation Delivery means - 110, send a message to the Participants selected to play a segment of the game to the select User Means-109. The Advertisement Validation and Profile Validation Means - 111 and the Advertisement Delivery Means - 112, validates the profile of a loggedin participant with the parameters set for each advertisement by the Set Parameters for Advertisement Means -102, and delivers an appropriate advertisement to every participant in accordance to the parameters set by Advertisement Means- 102. It is envisaged that different logged in users will receive different advertisements in accordance with their profile for instance only a Male participant will receive an advertisement for Shaving Cream where as only a female participant may receive an advertisement for Lipsticks.

The Question Transmission Means - 113, permits an administrator operating the controller C to transmit a question to all the logged in users. This means also permits only the participant selected by Select Users Means - 109 to submit a competitive response to a question in a limited time frame, set in the parameters by Set game Parameters Means - 101 and blocks the responding mechanism for the non-selected logged in users. It is obvious that while all logged in users can view various aspects of the game including the Question transmitted, response choice available and some or all of the responses submitted by selected participants, only selected participants are permitted to submit a competitive response. This selection mechanism maintains interest during the playing of the game for every segment since different participants may or may not be selected for playing a segment. At any given instance the Controller may in accordance with parameters set by the set game parameters means -101 randomly permit all users to respond to all or any particular segments of the game, thus increasing uncertainty and therefore highlighting interest.

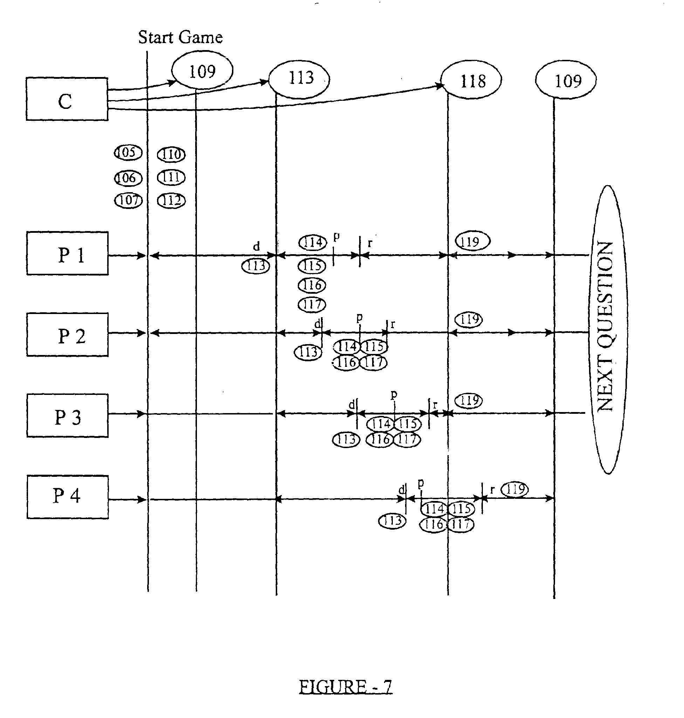

The Timing User Response Means - 114, is a significant feature of this invention and times the response submitted by every individual selected participant P. The details of this means will be described when describing the Time Sequence Diagram illustrated in FIG. 7. This tool the Timing User Response Means 114 is particularly significant because it measures the actual time taken every individual participant for responding and filters out the delays caused by non-uniform network transmission and/or non-uniform speeds and other characteristics of the Participant Nodes, thus making the participation equitable for all the participants.

The Encryption of User Response Means - 115, encrypts the response of each individual selected participant along with the time taken to respond. This ensures security of the game conditions not permitting a participant to alter a response once submitted or modify the time taken to respond. After encryption by the Encryption Means -115, the Send Response Means - 116, allows communication from the selected participant to the Controller C to receive a response and process it using the Update User History Means - 117, Select Winner Means 118, display User Means 119. The update user history Means updates the response sent by every selected participant in a database, The means Select Winner Means - 118 selects a winner on the basis of a correct response and quickest time or any other such parameter which may be set and the display winner means - 119, allows the Controller C to transmit to all the logged in Users, a Display sequence showing the result of a game segment.

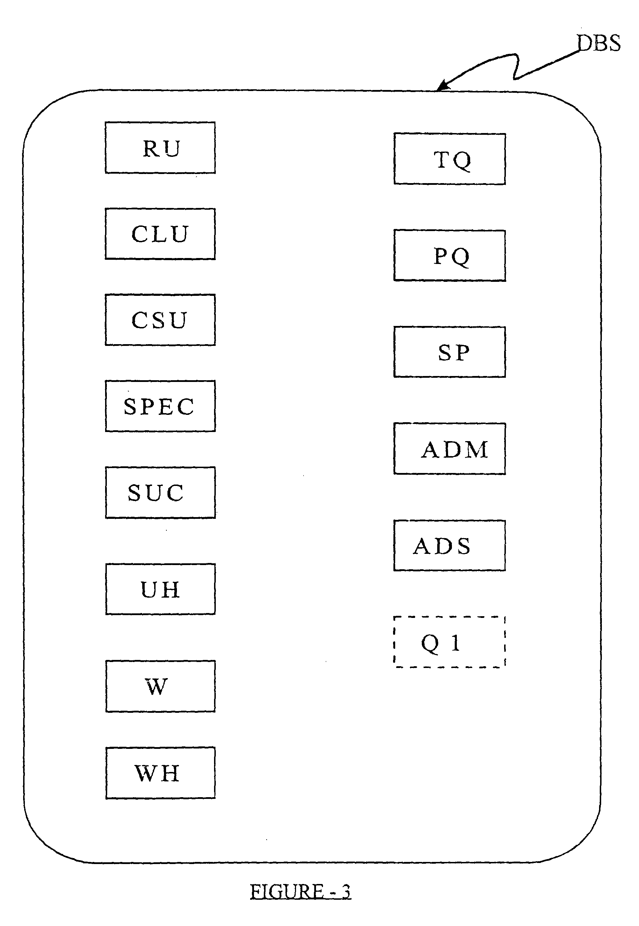

FIG. 3 illustrates the various databases created or loaded in the Bank of Database Servers DBS which are used by the Means/tools created or loaded on bank of Application Servers AS, the Controller C and the Participants P for playing the game in accordance with this invention. The Database Server includes a Database of all Registered Users - RU, which stores the profile of every individual registered user with fields like User-id, Password, Name, Address, Occupation, Date of Birth, Income Group, Gender and the like. This Database RU permanently resides in the bank of Database Server DBS and can be used online or off-line by the administrator operating the Controller C for various games or advertisement-related activities.

The Database Q1 is a question database in accordance with one preferred embodiment of the invention in which the question database Q of FIG. 1 resides in the bank of Database Server DBS and the administrator operating the Controller C can select randomly or otherwise a particular question from the Database Q1. It is envisaged that the questions in the Database Q1 may be classified, Categorized and/or are arranged in a hierarchy of difficulty levels or other parameters enabling variety to be introduced in an orderly fashion in the course of playing the game.

The Database ADS in the bank of Database Servers DBS contains a plurality of advertisements in a transmissible format flagged with the requisite parameters. The flags include such characteristics of the advertisement as its category, type, profile of target audience, the duration and frequency for transmission of the Advertisement, the details of the Advertiser and the instance before, during or after the game, in online or off-line mode, when the advertisement is determined to be transmitted.

The database ADM is a database containing information of authorized administrators who are permitted to operated the Controller means C and includes security arrangements to prevent unauthorized entry into the gaming the system.

The database Server DBS includes a database SP that contains the Set Parameters for conducting the game and will have fields like start game time, date, no. Of users to be selected per segment of game, no. Of game segments, the criteria for selection of participants to respond, the criteria for selection of winner/s the time sequences, game segment intervals, Advertisement Segment intervals, The prize money amounts and distribution and the like.

The databases CLU which contains the list of Currently logged in participants, the CSU which contains the list of Participants selected to respond for the current game segment, SPEC which contains the list of participant logged in but classified as Spectators, TQ which contains a query related to a particular game segment and W which contains the winner details of particular game segment, are databases which are actively operated upon during the running and playing of a game and are continuously refreshed and recycled and therefore their contents are of a temporary nature.

The databases SUC which is a database containing the statistical data of Registered Participants relating to parameters such as their login behaviour, the database UH which is a database containing the history of all the participants Selected to Respond during all the games and segments thereof along with the response give by the participant and time taken for such response, the database WH which contains the winner details for all the games and the segments thereof, the database PQ which is a database containing the details of all questions transmitted during the playing of all games and segment thereof, are databases of a permanent nature and are generally updated on the completion of a game segment or a game. Periodically these databases may be emptied or transferred or purged to a records storage means or a database.

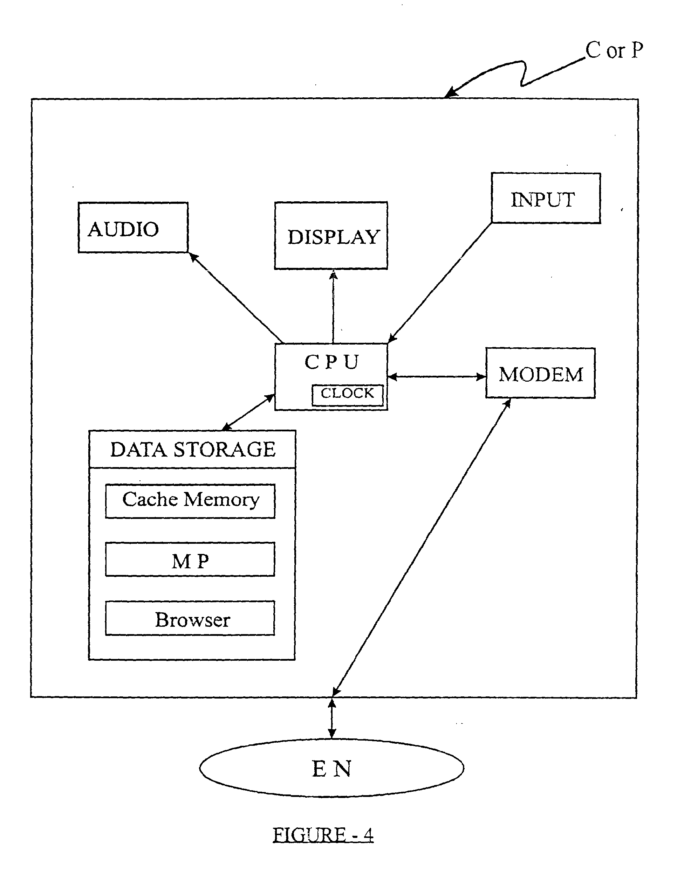

FIG. 4 is a block schematic diagram of the Controller means or participant node means forming part of the apparatus embodying the present invention as seen in FIG. 1. The Controller C or the Participant Node P comprises a central processing unit CPU, which is typically a Pentium processor with 166 MHz or above with a minimum of 32 MB RAM. However any other suitable processor including Macintosh and higher versions of Intel processors may be used. The CPU is connected to a display device DISPLAY, which may be a monitor, pointer means and inputting means INPUT, which may be a keyboard and mouse, data storage means DATA STORAGE which includes a Cache Memory, Media Player MP, which is a means to display a graphic sequences in animation mode, video sequence, text and the like on the DISPLAY and play it through the AUDIO. The DATA STORAGE includes a BROWSER which permits navigation and browsing on the electrical or electronic network EN connected to the CPU via a communicating device MODEM. The CPU includes a timing device CLOCK which may be a real-time clock and which times various operations performed by the CPU. MODEM could be any communicating device connecting the CPU to the electronic network EN.

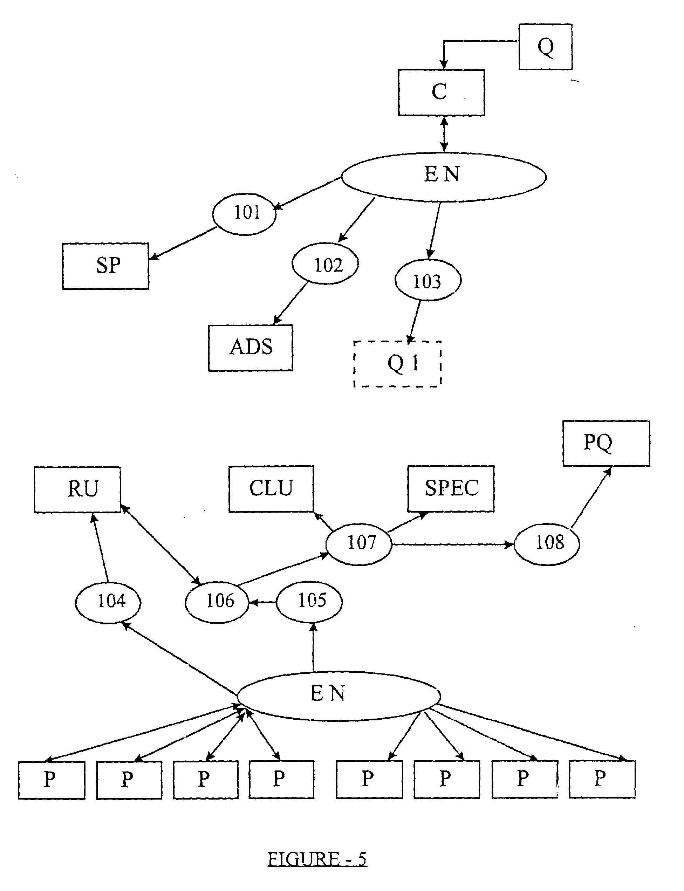

FIG. 5 is a block schematic diagram of the broad outline of the method for setting up the apparatus for playing the interactive game using the apparatus embodying the present invention as seen in FIG. 1.

The Controller C is setup in the following manner for playing of the game. The controller C is connected to the electrical or electronic network EN and then to the Application server AS and the Database Server DBS.

Alternatively, could be one of the servers forming part of the Application Servers AS bank. In accordance with a preferred embodiment of the invention, the Application Server AS could be directly connected to the network service provider via a LAN connection thereby providing a faster connection between the Application Server AS and the network EN. In the process of setup, an administrator operating the controller C sets the parameters for playing the game or a game segment using the set game parameters means - 101. The parameters set are stored in the database SP. The controller C uses the Set Parameters for advertisement means - 102 to set the parameters for displaying the advertisements before, after or between the game and any game segment. The parameters set are stored in the database ADS. As far as questions are concerned, the controller C may draw upon an externally located databank Q for the quiz questions to be asked in the course of the game or the game segment or the administrator uses Question database means - 103 to draw upon the questions stored in database Q1.

Individual participant nodes P are setup for playing the game in the following manner. The participant nodes P are connected into the electrical or electronic network EN via which the are connected to Application Server AS and the Database Server DBS. Using the means - 104 the user of the participant node P will register himself with the controller in order to be allowed to participate in the game to be played. The information of the user of each participant node is stored in the database RU. When a user wishes to participate in the game he will use the User Login means - 105 to login and let the controller C know of his availability for playing the game? The information submitted by the user namely User-id and Password at the time of login is passed on to the User Validation Means - 106 for validation with the information stored in the database RU and after validation is submitted to classification means - 107. Depending on the parameters set in the SP database by the controller the classification means - 107 classifies the participant as a Currently Logged in Participant or a Spectator. The classification means - 107 also permits the participant to play previous games or off-time games using the means - 108 and the database PQ. The classification information is stored in databases CLU and SPEC respectively which are the databases for the Currently logged in Participant information and the Spectator information.

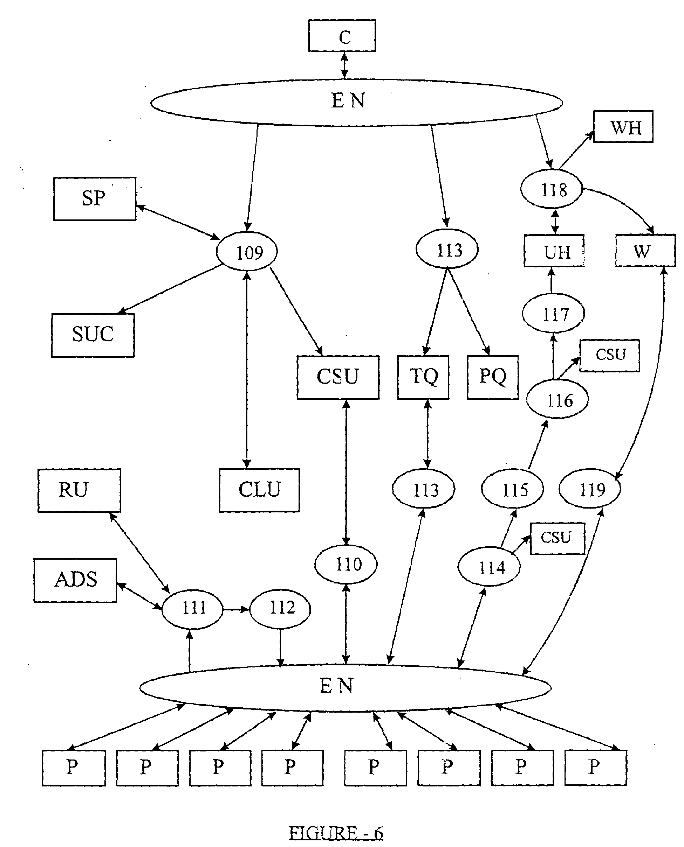

FIG. 6 is a block schematic diagram of the method of playing the interactive game using the apparatus embodying the present invention as seen in FIG. 1. After the setup steps outlined in FIG. 5. The administrator operating the controller C uses the select User Means-109 to start the game. The select User Mean - 109 will select a certain no. of users from the Database CLU according to the parameters set in database SP and store the same in database CSU ( Currently Selected Users). The database SUC is also updated by this means with statistical information of selection of participants. The Intimation delivery means - 110 activated by the participant node P will check if a particular participant has been selected in CSU and inform the participant accordingly of his selection for a game segment. If a participant is not selected, the participant is a spectator by default for that game segment.

Now the controller C uses Question transmission means - 113 to transmit a question for the game segment which is stored in the database TQ. All the participants selected or not selected for this game segment will use the Question Transmission means - 113 to fetch and display in DISPLAY the question from the database TQ for this game segment. The Controller C also uses the Question Transmission means - 113 to store the question transmitted to database TQ to the database PQ for permanent storage of all questions transmitted.

On receiving the question the user of a participant node P has a set time in which to respond to the question. Typically the question envisaged in one embodiment of this invention is a question having typically 4 multiple-choice responses. The responses are created by using the inputting means such as a mouse to click on to one of the choice of responses. The Timing User Response means - 114 checks from the database CSU and selectively permits only the participants in the CSU to submit a valid response by creating a response mechanism for the participants in the CSU and not enabling this mechanism for participants not in the CSU.

The Timing User Response Means - 114, is a significant feature of this invention and times the response of every individual selected participant P. The details of this means will be described when describing the Time Sequence Diagram illustrated in FIG. 7. This tool the Timing User Response Means 114 is particularly significant because it measures the actual time taken by every individual participant for responding and filters out the delays caused by non-uniform network transmission and/or non-uniform speeds and other characteristics of the Participant Nodes, thus making the participation equitable for all the participants.

The Timing User Response means - 114 passes the response information to the Encryption of User Response Means - 115, which encrypts the response of each individual selected participant along with the time taken to respond. This ensures security of the game conditions not permitting a participant to alter a response once submitted or modify the time taken to respond. After the response has been encrypted by the Encryption Means -115, the control is transferred to the Send Response Means - 116, which communicates the response from the selected participant to the Controller C by storing it in the CSU. The Update User History means - 117 updates the response sent by every selected participant in the database UH. During this process the controller C uses the Select Winner Means - 118 to continuously monitor the database UH. After a predetermined set time from the transmission of the question by Question transmission means - 113, the controller uses the means Select Winner Means - 118 to select a winner on the basis of a correct response and quickest time or any other such parameter which may be set in the PS database. The controller C then uses the Select Winner means - 118 to update the database WH with the information of the winners for a permanent record in the database and write the information in the database W for temporary storage. All the Participants use the display User means - 119 to a Display sequence showing the result of a game segment in their DISPLAY.

The Database ADS in the bank of Database Servers DBS contains a plurality of advertisements in a transmissible format flagged with the requisite parameters. The flags include such characteristics of the advertisement as its category, type, profile of target audience, the duration and frequency for transmission of the Advertisement, the details of the Advertiser and the instance before, during or after the game, in online or off-line mode, when the advertisement is determined to be transmitted. During the game a participant node P uses Advertisement Validation and Profile Validation Means - 111, to validate the profile of a loggedin participant with the parameters set for each advertisement by the Set Parameters for Advertisement Means - 102 in ADS against the profiles of individual users available in the database RU, and uses the Advertisement Delivery Means - 112 to fetch an appropriate advertisement to every participant in accordance to the parameters set by set parameters for advertisement means tool - 102.

The unique feature of this invention is the delay filtering means built into the apparatus. The delay filtering apparatus precisely measures the time interval between the instant at which a question is displayed on each participant node and the instant at which each participant respond.

This delay filtering is achieved by the combination of the Question transmission means 113, the Timing User Response Means 114, Encryption Means 115, 116, Update User History Means 117 and the Select Winner Means 118. Question transmission Means 113 stores the question sent into the database TQ and at the same time sets a flag with the Controller C to indicate that a question has been written in database TQ. The participant node P uses the same Question transmission means 113 to check for the arrival of the question in database TQ by looking out for this flag at refreshing intervals ranging between 3 to 25 seconds. The instance of refreshing of every participant will vary. Hence the instance at which every participant P receives the question will vary. As soon as the Question transmission means 113 used by the participant P sights the flag in the Controller indicating the arrival of a question it fetches the question from the database TQ for the individual participant and displays it on the display means of the participant. This instance is indicated by the instance d in Figure 7. The Timing User Response means 114 is activated by each individual participant at his or her own instance d and the time interval for responding is calculated from instance for each individual participant.

FIG. 7 is a graphical time sequence schematic diagram showing the time sequence controls in the course of showing the interactive game of the present invention. In FIG. 7 typical situations for different participants are illustrated. The controller sets the time sequences as follows :

The sequence commences when the controller uses the select User Means-109 to select the user for a particular game segment from the CLU. The controller C uses the Question transmission means 113 to set the time for a user response based on the time interval specified in the SP database. The transmission of a question using Question transmission means - 113 begins this time interval. The Select Winner Means - 118 closes the interval allowed for the selected participants to respond and then sets a further time interval for the selection of the next batch of participants for the next segment of the game after which select User Means-109 is activated.

In the FIG. 7 four participant nodes are illustrated designated as P1, P2, P3 and P4. Each of these participants are presumed to be selected to respond to a segment of the game by the select User Means-109. Prior to the selection process each of these participants have used the User Login Means 105, User Validation Means 106 and classification means 107 to login, get validated and classified as Currently Logged in Participants respectively. The Validation means 111 and Advertisement Delivery Means 112 which relate to the selection and transmission of advertisements, displays the advertisements in the time interval between the start of the game and the interval set by Question transmission means 113. The Intimation delivery means 110 will inform all the selected participants P1 to P4 that they have been selected to respond to the next segment of the game. Participant nodes P1 to P4 are presumed to have non-uniform connectivity to the electrical or electronic network EN. This non-uniformity may arise as a result of an inherent difference in their CPU or modem or the external differences in the EN that they are connected.

In the FIG. 7 the participants P1 to P4 receive the question transmitted by the Question transmission means 113 in a staggered manner at instance 'd'. The time available for every user to respond designated by the time difference between instance 'd' and instance 'r'. The time interval 'd-r' is set in the database SP and is equal for every participant irrespective of the commencement instance 'd'. Therefore the apparatus and method of this invention filters out the delay that may be caused to a user to respond as a result of the slowness of the CPU or the slowness of the EN to which the participant is connected. The instance of response by each participant is designated as 'p'. It is presumed in the FIG. 7 that all the participant P 1 to P4 respond within the 'd-r' interval. Participants that do not respond at all or do not respond within the 'd-r' interval are automatically eliminated from the winner selection process by the Select Winner Means - 118. All the participants P1 to P4 have made a valid response and therefore are eligible for selection of winner by Select Winner Means - 118. In the case of participant P4 it is seen the 'd-r' interval stretches beyond the instance set by winner selection using Select Winner Means - 118. If the instance 'p' had occurred beyond the time instance set by Select Winner means 118, the response of P4 would not have been considered for winner selection at all. This brings in further equity in the process. In the event that the shortest time interval is one of the criteria for winner selection, the interval 'd-p' becomes relevant for winner selection. In the case illustrated P4 has the shortest 'd-p' interval even though P4 receives the question the last at instance d. The display User means 119 will display the result of the segment for all the participants P1 to P4 as seen in the FIG. 7. The time at which the result is displayed may also be unequal for different participants. The process means select User Means-109 activated after a pre-set time interval again aligns all the participants P1 to P4 before the next segment of the game.

Advertisements are displayed during time intervals from Start game to instance 'd'. From instance 'r' to the operation of display User Means 119 and between end of display User means 119 to the commencement of the next segment of the game activated by the administrator.

The game in accordance with this invention can be typically designed as per the following requirements:

### Conditions During Login time.

Case1: If Before Valid Login time then user can go and play the previous games. Such games will not entitle the User to any prize money and are only for practice.

Case2: If During valid login time that is half an hour before the game show starts, then he is eligible to be selection to play the game as per the random selection criteria mentioned in rule number 6.

Case3: If After valid Login time (i.e. during game time) then the user will be a spectator to the show and cannot participate in it by any means.

### Sequence for playing the Online Game.

1. Go to the URL
2. Login for registered users.
3. If logged on during the valid time (such as half an hour before the show) then he is eligible to play the game. And the Advertisement files (embedded in Flash4 format) start's downloading till the time the game begins.
4. When the game begins the user can play if he is selected for the question or else he can be a spectator to the game.
5. A selection procedure is followed as described in detail herein above.
6. If the user is selected and he gives a right answer he is eligible for playing the bumper question at the end of the game.
7. If the user gives a wrong answer then he will not be selected for any other questions in the game. He can only be a spectator to the game till the end.
8. After each question the name of the user will be displayed on the screen if he is a winner. Also name of the users who have given the right answer will also be displayed.

### Sequence for registering for the online game show.

1. Go to the URL.
2. Click on the New player Button.
3. Agreement for acceptance of Laws and Tax laws. (If accepted then proceed.)
4. Page for the plugin's required with the Link to the websites is given.
5. Registration form to be filled will contain complete details as specified.
6. and the user will be allotted a unique login name and a password as selected by him, which can be used at a later stage to login directly from the form the Home page.

The system Requirement (Participant Node side) is as follows
1. IBM clone machines or PC with minimum 16Mb Ram.
2. Operating system required is Win95 / Win98.
3. Multimedia
4. An Internet connection.
5. Internet Explorer Version 5 with JavaScript Enabled.

### The controller side Requirement.

1. The server should typically have Linux or higher installed
2. MySql as Database.
3. Support for PHP3 on it.
4. Server should be set to a particular Standard time, for instance, Indian Standard time.
5. Should have sufficient hard disk space for loading the website and also for maintaining the data base of the scalable users
6. Should have sufficient Bandwidth to handle the scalable users.

The Features of the software in accordance with this invention for playing the game are as follows:-
1. The Software should be able to maintain a database of the participant nodes details and also the user name and passwords.
2. Should be able to allot the user a login Id when he logs on, This id will be used to compare the winners in case if there is a Tie.
3. Should be able to take the parameters from the central computer system/server side Browser (i.e. IE5 only) and process it for the winner on the following logic.
   a. First compare the Answers with the right answer. If right then proceed.
   b. Compare the time taken to answer.. The participant giving the fastest correct answer will be declared as the winner and the message will be displayed on the server side browser screen. If there is a tie then proceed.
   c. The Login time of participants in the tie will be compared. Only the user, which logged on the earliest, will be the winner.
4. The Software should be able to play the Advertisement files (embedded in Flash4 format only & one file only.) in the time remaining on the participant node's side after he answer's the questions.
7. It will have an Administrator Interface .
8. The user/participant interface and features will be as per Figure 4 of the accompanying drawings.

The method of playing the game in accordance with this invention is as follows:

The game will be played every day at a specific time for a specified period (e.g. 1200hrs IST for 60 min or 120 min or any fraction thereof - the game will not be played for 24 hours every day)

A maximum of 16 questions based on multiple choice will be asked every day. A maximum of 25 participants will be selected on a random-cum-sequential basis, from among those who are logged-in to play the game on that day, to answer each question;

The selection of 25 participants for each question will be as follows;
40% will be selected on a random basis from among all those who are logged-in;
40% will be selected on a random basis, from among all those who are logged in but have not been selected till date to answer any question;
20% will be selected from among those who have logged-in earliest on that day. (@ 5 members per question, the first 80 members who have successfully logged-in will certainly get a chance to play any one of the 16 questions on any day)

The questions may be based on any subject, including General Knowledge, current events or may include audio and visual clues (e.g. identify the music / sound clip or identify the person / place / object). The answer will be in the form of multiple choice and will have a prespecified maximum time for answering the question (e.g. 30 sec or 45 sec);

Question no. 1 to Question no. 15, will be answered by a different set of 25 participants. I.e. a total of 375 participants will be answering the Q no. 1 to Q no. 15, each in a batch of 25 participants;

For answering any question, the participants who have been selected to answer the question has to click on the option (A); (B); (C) or (D) which he thinks is correct within the prespecified maximum time; A participant giving correct answer in minimum time will be declared as the winner for that question;

In case two or more participants give the correct answer to a question in the same time, the participant having earlier login-id (from among those who have given correct answer in the same minimum time) will be selected as winner for that question;

The participant giving correct answer to any question, in minimum time will be given a prize of Rs. 10,000/-. All the other participants giving correct answer in any question (i.e. Q no. I to Q no. 15) will be given a prize of Rs. 1000/-.

On every day, Q no. 16 will be the prime question and will carry a bonus prize of Rs 100,000/-;

Q no. 16 will be answered by a minimum of 25 participants selected as per 3 above and all the participants who have given correct answers to any question from Q no. 1 to Q no. 15, on that day; (the rumber of participants for question no. 16 will be between 25 to 400)

Twice a month, on a pre announced day, the Q no. 16 will carry a mega bonus prize of Rs. 1 Crore (Rs. 100,00,000/-);
Any participant winning more than one prize on any one day will be given only one prize. (i.e. if any participant wins the mega bonus prize or the bonus prize for Q no. 16 on any day, he will not be entitled to the winning of Rs. 10,000/- or Rs. 1000/- on the same day.)

Payment of prize money will be made by Demand Draft or Bankers Cheque only, in the name specified by the participant at the time of Registration;

A participant can be selected more than once to play the game; and

A participant can avail of any help from relatives, friends and peers and reference Manual.

In case of any dispute, the decision of the Administrator of the game will be final.

For any person wishing to participate in the game, the following configuration of the computer is typical in accordance with this invention:
Equivalent of Intel Pentium 166 MHz or higher;
32 MB RAM or higher;
Microsoft Windows 95 or Microsoft Windows 98;
Microsoft Internet Explorer 5 or Netscape -
Sound Card and speakers;
28.8 Kbps modem or higher

The selection process for 25 participant to answer each question is based on random-cum-sequential basis. This provided an incentive to a viewer to login early and wait at the website for the game to begin. This login before the start of the game allows all the files for advertisement to be downloaded to the participant node and also additional advertisement time for the sponsors.. The selection of 25 new / different participant, just before the start of a question, followed by the question (The time of asking the question is outside the control of the participant) and a prespecified time limit to answer the question, will also ensure the viewer ship of all the participants.

An electrical or electronic network based applications suffer from the size bandwidth available with the user and normally does not exceed 56KBps. It is therefore envisaged in accordance with this invention that the advertisements will be in a medium such as flash media that allows graphic animations to be run from the participant node desktops. The Flash application files are small in size and are stored on the hard disk of the participant and therefore can be played repeatedly without affecting an electrical or electronic network speed or the game speed. Further, banner advertisements can be placed on the pages displaying the questions and results. The time estimated for running a question and the outcome of its answer is 2 (two) minutes. Hence, for the 16 questions an estimated 32 minutes will be available for banner advertisement.

While the invention has been particularly shown and described with reference to a preferred embodiment, it will be understood by those skilled in the art that various changes in form or in detail may be made therein without departing from the spirit and scope of the invention.

For instance, to ensure view ship it may be envisaged that one of the questions say the fifteenth question may be not in the quiz format but may relate to the advertisements posted on the display of the user during the game. Such a question or questions may be thrown open to all persons logged into the program whether as a registered user or as a spectator. Such questions may be termed as sponsored questions entitled to prizes directly from the advertiser. Such a variation permits instant feedback to the advertiser concerning the reach and effectiveness of its advertising and is in the nature of an interactive feedback.

Again bean counters and other counters, may be provided to keep track of the number of viewers logged in and to keep track of the time that each viewer has logged in for statistical purposes.

It will appreciated that the rules of the game and the parameters set for the game may be modified to include different variations of the game. Thus using the same set up of apparatus in accordance with this invention it is possible to play the game with a single participant at a time. In such a format the questioning format may envisage a hierarchy of questions of increasing difficulty and competitor participants may be questioned until they fail to respond correctly. The winner in such a case could be a participant who reaches the highest level of questioning. In such a format it may be possible to provide one or more clues to the answers which may be tagged along with the question and can be viewed by a participant.
It is envisaged that text, video and audio messages may be in the form of compereing messages and may include the video display of an actual compere.

Another variation permissible is that a participant may be awarded points for playing and answering Off time game questions. These points could be redeemed during a current game to ensure an award such as guaranteed participation.

It is envisaged that in accordance with a modification of this invention, some of the means illustrated in Figure 2 and some of the databases illustrated can be downloaded on the data storage means of the participant nodes. As will be readily appreciated, numerous variations and combinations of the features set forth above can be utilized without departing from the present invention as set forth in the above description of the invention . Such variations are not regarded as a departure from the spirit and scope of the invention, and all such modifications are intended to be included within the scope of the above description. Various modifications and improvements can be envisaged without departing from the nature and the cope of the invention described hereinabove.

## Claims

1. Apparatus for playing a quiz game of skill playable by remotely located participants simultaneously logged in and competing against each other, said game including inserted advertising comprising:
a network structure for allowing multiple players to engage in a quiz game using an electrical or electronic network for data exchange; and a control system for establishing a virtual universe for said quiz game that can be accessed by any of said multiple players via an electrical or electronic network, said control system being operative for providing quiz questions and inserted advertisement for each of said multiple players; said control system including:
text means for receiving a text input from each one of said multiple players, said text input being in response to the quiz question which is in the form of a multiple choice question.

2. Apparatus for playing a quiz game of skill playable by remotely located participants simultaneously logged in and competing against each other, said game including inserted advertising as claimed in claim 1, further comprising an interactive control unit at a remote location for selecting, storing, transmitting and displaying questions on a display terminal at a plurality of remote locations and for receiving, storing and analyzing user answer choices to said questions; a plurality of user side apparatus for users to enter said answer choices; said interactive control unit comprising a computer, a base station connected to said computer for receiving said user answer choices from said user side apparatus and sending said user answer choices to said computer, a broadcast receiver connected to said computer for receiving broadcasts containing a series of questions from a central broadcast facility and sending said broadcasts to said computer, and a modem connected to said computer for transmitting statistics based on said user answer choices to said central broadcast facility after said users have entered said answer choices to one or more questions within said broadcast.

3. Apparatus for playing a quiz game of skill playable by remotely located participants simultaneously logged in and competing against each other, said game including inserted advertising as claimed in claim 1, further comprising means for sending output signals from a central computer system relating to the quiz game, means for receiving input signals from users who wish to register as potential participants in the game, means to store data relating each of the registered participants with means to continuously update such data, data storage means, to receive and store quiz questions and updating means to add or delete questions in the question store, randomizing means to randomly select participants from the stored data bank of users and for selecting a particular question to be incorporated in the quiz game receiving means for receiving input signal means representative of response regarding said quiz game from any of multiple players, processing means for processing time bound response time of data received from each of the multiple players said means further having means in which answers to the quiz question are entered for comparison of the entered answer with the stored, correct answer. A storage device, the storage device being controlled by a controlling means, determines the winners of the quiz game and means to identify which of the participants has responded correctly and in the shortest response time. a processor for processing said input signal representative of data and outputting in substantially real-time text, video and/or audio information relating to said game in response to said input, said processor being operative for establishing at least one game winner for at least one segment of the quiz game.

4. Apparatus for playing a quiz game of skill playable by remotely located participants simultaneously logged in and competing against each other, said game including inserted advertising, comprising:
(i) A participant node defined by
a) display means for displaying data;
b) Inputting means or pointer means such as a keyboard or a mouse;
c) Data storage means
d) Connectivity means to connect the participant node to an electrical or electronic network;
e) Processing means adapted to -
a) control the display means
b) receive signals from the inputting means, process these signals and transmit these signals to an external device cooperating with the said processing means;
c) receive information from an external cooperating device, process this information to data and store the data in the said data storage means;
d) fetch data stored in the said data storage means for processing and/or display in the said display means; and
e) alter the said data stored in the said data storage means and transfer data stored, processed, altered and/or displayed to an external cooperating device through the connectivity means;
(ii) a controller means adapted to communicate with the said nodes via a bank of application servers containing at least one application server and a bank of data base servers containing at least one data base server, through an electric or electronic network for playing the game in accordance with predetermined rules of the game and set parameters and transmitting advertisements inserted between segments of the game or during a game said combination of controller means, application server means and data base means adapted :
a] to transmit a question from a question data bank to be receivable by the participants simultaneously within a predetermined time interval;
b] to receive responses from the participants simultaneously in a predetermined time interval;
c] to process the responses received to ascertain whether a correct response has been received within the set time limit; and
d] to transmit advertisements to be displayed in the display means associated with all the participant nodes.

5. Apparatus for playing a quiz game of skill as claimed in claim 4, in which the controller means is an application server in the bank of application servers.

6. Apparatus for playing a quiz game of skill as claimed in claim 4 which the bank of application servers includes Set Game Parameter Means, which enable the Controller means to perform various functions including preset the rules and parameters for playing the game. to edit, modify, alter, delete, and add new and or otherwise change the Parameters for playing the game.

7. Apparatus for playing a quiz game of skill as claimed in claim 4, in which the bank of application servers includes a Set Parameters for Advertisement Means, which enables the Controller to set the Advertisements to be inserted in between game intervals and to edit, modify, alter, delete, and add new and or otherwise change the Parameters for Advertisement during the playing of the game.

8. Apparatus for playing a quiz game of skill as claimed in claim 4, in which the bank of application servers includes a tool for New Registrations , which enable Participants at individual participant nodes to register their details with the Controller, so as to login and play the game.

9. Apparatus for playing a quiz game of skill as claimed in claim 4, in which the bank of application servers includes an Add questions to Question Database means, which allows the Controller means to add, edit, modify, alter, delete, add new and or otherwise change the questions for playing the game.

10. Apparatus for playing a quiz game of skill as claimed in claim 4 , in which the bank of application servers includes a User Login Means, which allows pre-registered participants at participan nodes to submit their login information including User-id and Password to the Controller means for playing game.

11. Apparatus for playing a quiz game of skill as claimed in claim 4 , in which the bank of application servers includes a User Validation means which, validates the Login information supplied by participants in the process of Login.

12. Apparatus for playing a quiz game of skill as claimed in claim 4, in which the bank of application servers includes a Classification Means, which permits the classification of the logged in users into different categories on the basis of information provided by the Participants at the time of Login.

13. Apparatus for playing a quiz game of skill as claimed in claim 4, in which the bank of application servers includes an Off-time Game Playing Means which, allows a Participant to play the Game in Off-Time mode.

14. Apparatus for playing a quiz game of skill as claimed in claim 4, in which the bank of application servers includes a Select User Means which selects a set of Participants from the Currently Logged in Users to play a segment of the game in accordance with the rules of the game and parameters set by means.

15. Apparatus for playing a quiz game of skill as claimed in claim 4, in which the bank of application servers includes an Intimation Delivery means which, send a message to the Participants selected to play a segment of the game.

16. Apparatus for playing a quiz game of skill as claimed in claim 4, in which the bank of application servers includes an advertisement validation and profile validation means and an Advertisement Delivery Means, which validates the profile of a loggedin participant with the parameters set for each advertisement, and delivers an appropriate advertisement to every participant in accordance to the parameters set.

17. Apparatus for playing a quiz game of skill as claimed claim 4, in which the bank of application servers includes a Question Transmission Means, which permits an administrator operating the controller means to transmit a question to all the logged in users and is adapted to permit only the participant selected by Select Users Means to submit a competitive response to a question in a limited time frame, set in the parameters by Set game Parameters Means and adapted to block the responding mechanism for the non-selected logged in users.

18. Apparatus for playing a quiz game of skill as claimed in claim 4, in which the bank of application servers includes a Timing User Response Means which times the response submitted by every individual selected participant and is adapted to measure the actual time taken by every individual participant for responding and filtering out the delays caused by non-uniform network transmission and/or non-uniform speeds and other characteristics of the Participant Nodes, thus making the participation equitable for all the participants.

19. Apparatus for playing a quiz game of skill as claimed in claim 4, in which the bank of application servers includes an Encryption of User Response Means which, encrypts the response of each individual selected participant along with the time taken to respond.

20. Apparatus for playing a quiz game of skill as claimed in claim 4, in which the bank of application servers includes a Send Response Means which, allows communication from the selected participant to the Controller to receive a response and process it.

21. Apparatus for playing a quiz game of skill as claimed in claim 4, in which the bank of application servers includes an update user history Means which updates the response sent by every selected participant in a database.

22. Apparatus for playing a quiz game of skill as claimed in claim 4, in which the bank of application servers includes a Select Winner Means which, selects a winner on the basis of a correct response and quickest time or any other such parameter which may be set.

23. Apparatus for playing a quiz game of skill as claimed in claim 4, in which the bank of application servers includes a display winner means which, allows the Controller to transmit to all the logged in Users, a Display sequence showing the result of a game segment.

24. Apparatus for playing a quiz game of skill as claimed in claim 4, in which the bank of application servers includes a delay filtering means which, measures the time interval between the precise instance at which a question in a game segment is displayed in the display of each participant node and the instance at which the user of the participant node responds.

25. Apparatus for playing a quiz game of skill as claimed in claim 4, in which the bank of database servers includes a Database of all Registered Users, which stores the profile of every individual registered user with fields like User-id, Password, Name, Address, Occupation, Date of Birth, Income Group, Gender and the like and is adapted to be used online or off-line by the administrator operating the Controller for various games or advertisement-related activities.

26. Apparatus for playing a quiz game of skill as claimed in claim 4, in which the bank of database servers includes a questions database adapted to permit random selection of particular questions and in which the questions database are classified, Categorized and/or are arranged in a hierarchy of difficulty levels or other parameters enabling variety to be introduced in an orderly fashion in the course of playing the game.

27. Apparatus for playing a quiz game of skill as claimed in claim 4, in which the bank of database servers includes an advertisement database which contains a plurality of advertisements in a transmissible format flagged with the requisite parameters, the flags including such characteristics of the advertisement as its category, type, profile of target audience, the duration and frequency for transmission of the Advertisement, the details of the Advertiser and the instance before, during or after the game, in online or off-line mode, when the advertisement is determined to be transmitted.

28. Apparatus for playing a quiz game of skill as claimed in claim 4, in which the bank of database servers includes a database containing information of authorized administrators who are permitted to operated the Controller means and includes security arrangements to prevent unauthorized entry into the game apparatus.

29. Apparatus for playing a quiz game of skill as claimed in claim 4, in which the bank of database servers includes a database that contains the Set Parameters for conducting the game which includes fields like start game time, date, no. of users to be selected per segment of game, no. of game segments, the criteria for selection of participants to respond, the criteria for selection of winner/s the time sequences, game segment intervals, Advertisement Segment intervals, the prize money amounts and distribution and the like.

30. Apparatus for playing a quiz game of skill as claimed in claim 4 , in which the bank of database servers includes a database which contains a query related to a particular game segment.

31. Apparatus for playing a quiz game of skill as claimed in claim 4, in which the bank of database servers includes a database which contains the winner details of particular game segment.

32. Apparatus for playing a quiz game of skill as claimed in claim 4 , in which the bank of data base servers includes a database which contains the list of Participants selected to respond for the current game segment, a database which contains the list of participant logged in but classified as Spectators, a database which contains a query related to a particular game segment, a database which contains the winner details of particular game segment, each of said data bases being actively operated upon during the running and playing of a game and being continuously refreshed and recycled and therefore their contents being of a temporary nature.

33. Apparatus for playing a quiz game of skill as claimed in claim 4, in which the bank of database servers includes a database which contains the statistical data of Registered Participants relating to parameters such as their login behaviour.

34. Apparatus for playing a quiz game of skill as claimed in claims 4, in which the bank of data base servers includes a database which contains the statistical data of Registered Participants, a database which contains the history of all the participants Selected to Respond, a database which contains the winner details for all the games and the segments thereof, a database which contains the details of all questions transmitted during the playing of all games and segment thereof, each o said data bases being of a permanent nature and being generally updated on the completion of a game segment or a game, and being adapted to be periodically emptied or transferred or purged to a records storage means or a database.

35. Apparatus for playing a quiz game of skill playable by remotely located participants simultaneously logged in and competing against each other, said game including inserted advertising including a Controller means comprises a central processing means, connected to a display device, inputting means, data storage means which includes a Cache Memory, Media Player, a navigation and browser means which permits navigation and browsing on an electrical or electronic network connected to the Central processing means via a communicating device.

36. Apparatus for playing a quiz game of skill as claimed in claim 35, in which the Central processing means includes a timing device which may be a real-time clock and which times various operations performed by the Central processing means.

37. Apparatus for playing a quiz game of skill as claimed in any one of the preceding claims 4 to 48, in which the participant node comprises a central processing unit, connected to a display device, inputting means, data storage means which includes a Cache Memory, Media Player, a navigation and browser means which permits navigation and browsing on an electrical or electronic network connected to the Central processing means via a communicating device.

38. Apparatus for playing a quiz game of skill as claimed in claim 4, in which the participant node includes a timing device which may be a real-time clock and which times various operations performed by the Central processing means of the participant node.

39. A method for playing a quiz game of skill playable by remotely located participants simultaneously logged in and competing against each other, and inserting advertising while the game is in progress comprising:
i) setting up the apparatus for playing the interactive game comprising the steps of
ii) setting up the controller means by connecting the controller means to a bank of application servers and a bank of database servers via an electrical or electronic network , setting the parameters for playing the game or a game segment using the Set Game Parameter Means , storing the parameters set in a database on the database server setting the parameters for displaying the advertisements before, after or between the game or any game segment; storing the parameters set for the advertisements in a database on the database server ; selecting the questions to be transmitted for a game or a game segment from a question data bank or a question database on the database server;
iii) setting up of Individual participant nodes by connecting the central processing unit of the node into an electrical or electronic network via which they are connected to the bank of Application Servers and the bank of Database Servers; using the means - 104 to register the user of the participant node with the controller in order to be allowed to participate in the game to be played; storing the information of each registered user in a database on the database server; logging in of a participant node by use of the login user means to login and letting the controller know of the availability of the participant node for playing the game; validating the information submitted by the user by a user validation means for validation with the information stored in the database; classifying a user participant as a Currently Logged in Participant or a Spectator; storing the classification information in databases; starting the game by using a select User Means to start the game by selecting a certain number of users from the Database according to the parameters set and storing the same in another database being a Currently Selected Users database, using an Intimation delivery means for checking selection in the currently selected user database; transmitting a question using Question transmission means to transmit a question for the game segment which is stored in a database; allowing the selected participant node on receiving a question to respond to the question in a set time; using the Timing User Response Means, for timing the response of every individual selected participant ; using the Send Response Means for communicating the response from the selected participant to the Controller by storing it in a database ; using the select winner means to select a winner on the basis of a parameter set therefor and writing the information in a temporary database W ; and using the display User means to a Display sequence showing the result of a game segment in the display means of each participant node;
iv) storing a plurality of advertisements in a Database in the bank of Database Servers in a transmissible format flagged with the requisite parameters; such as its category, type, profile cf target audience, the duration and frequency for transmission of the Advertisement, the details of the Advertiser and the instance before, during or after the game, in online or off-line mode, when the advertisement is determined to be transmitted; using Advertisement Validation and Profile Validation Means, to validate the profile of a loggedin participant with the parameters set for each advertisement by the set parameters for advertisement Means in the database against the profiles of individual users available in the database of registered users, and further using the Advertisement Delivery Means to fetch an appropriate advertisement and deliver the same to every participant in accordance with the parameters set by set parameters for advertisement means tool .

40. A method for playing a quiz game of skill playable by remotely located participants simultaneously logged in and competing against each other, and inserting advertising while the game is in progress as claimed in claim 40, in which the database is also updated by this means with statistical information of selection of participants.

41. A method for playing a quiz game of skill playable by remotely located participants simultaneously logged in and competing against each other, and inserting advertising while the game is in progress as claimed in claim 39, in which each the time interval is calculated between the instance at which each a question is displayed in the display means of each participant node and the instance at which a user at the participant node responds.

42. A method for playing a quiz game of skill playable by remotely located participants simultaneously logged in and competing against each other, and inserting advertising while the game is in progress as claimed in claim 39, which includes the step of all the participants selected or not selected for this game segment using the Question transmission means to fetch and display a transmitted question from the database for a game segment.

43. A method for playing a quiz game of skill playable by remotely located participants simultaneously logged in and competing against each other, and inserting advertising while the game is in progress as claimed in claim 39, in which the Question transmission means is used by the controller means to store a question transmitted in a permanent database permanent storage of all questions transmitted.

44. A method for playing a quiz game of skill playable by remotely located participants simultaneously logged in and competing against each other, and inserting advertising while the game is in progress as claimed in claim 39 in which the question envisaged in one embodiment of this invention is a question having typically 4 multiple-choice responses and responses are created by using inputting means such as a mouse to click on to one of the choice of responses.

45. A method for playing a quiz game of skill playable by remotely located participants simultaneously logged in and competing against each other, and inserting advertising while the game is in progress as claimed in claim 39, which includes using a Timing User response means to check in the currently selected users database and selectively permit only the participants in this database to submit a valid response by creating a response mechanism for the participants in this database and disabling this mechanism for participants not in this database.

46. A method for playing a quiz game of skill playable by remotely located participants simultaneously logged in and competing against each other, and inserting advertising while the game is in progress as claimed in claim 39, in which a Timing User response means is used to pass the response information from an Encryption of User Response Means, and the response is encrypted along with the time taken to respond, ensuring security of the game conditions.

47. A method for playing a quiz game of skill playable by remotely located participants simultaneously logged in and competing against each other, and inserting advertising while the game is in progress as claimed 39, in which the Update User History Means is used to the updates the response sent by every selected participant in to a database.

48. A method for playing a quiz game of skill playable by remotely located participants simultaneously logged in and competing against each other, and inserting advertising while the game is in progress as claimed in claim 39, in which the controller means uses an updating means to update a database with the information of the winners for a permanent record of winners.
